# EUROPEAN PATENT SPECIFICATION

(11) **EP 1 826 247 B1**
(45) Date of publication and mention of the grant of the patent: **24.12.2014**
(21) Application number: 05803427.3
(22) Date of filing: 04.11.2005
(51) Int. Cl.: C09C 1/56, C09C 1/58, C09C 3/04, C09C 3/06, C09D 17/00

(54) **WATER DISPERSION OF CARBON BLACK AND PROCESS FOR PRODUCING THE SAME**
WÄSSRIGE DISPERSION VON RUSS UND HERSTELLUNGSVERFAHREN DAFÜR
DISPERSION AQUEUSE DE NOIR DE CARBONE ET SON PROCEDE DE FABRICATION

(30) Priority: 25.11.2004 JP 2004340094
(43) Date of publication of application: 29.08.2007
(73) Proprietor: Tokai Carbon Company, Ltd., Minato-ku, Tokyo 107-8636 (JP)
(72) Inventor: NAKATA, Hidenao, Minato-ku, Tokyo 107-8636 (JP); ARAI, Hironori, Minato-ku, Tokyo 107-8636 (JP)
(74) Representative: Flaccus, Rolf-Dieter
(86) International application number: PCT/JP2005/020677
(87) International publication number: WO 2006/057167

(56) References cited:
- EP-A2- 0 802 247
- WO-A1-96/01152
- WO-A2-01/94476
- WO-A2-2005/090486
- JP-A- 2003 535 949

## Description

### BACKGROUND ART

It is extremely difficult to stably disperse carbon black in water at a high concentration due to hydrophobicity and low wettability with water. This is because the surface of carbon black has an extremely small number (amount) of functional groups having high affinity with water molecules (e.g., hydrophilic hydrogen-containing functional groups such as a carboxyl group and a hydroxyl group). A known established measure is to improve the dispersibility of carbon black in water by oxidizing the carbon black to form hydrophilic functional groups on the surface of the carbon black.

For example, JP-A-48-018186 discloses a method of oxidizing carbon black using a hypohalite aqueous solution, and JP-A-57-159856 discloses a method of oxidizing carbon black using low-temperature oxygen plasma. However, it is difficult to uniformly oxidize a large amount of carbon black using low-temperature plasma.

A method of producing an aqueous ink is also known in which dispersibility of moderately oxidized carbon black in water is improved by using a coupling agent or a surfactant (e.g. JP-A-04-189877). However, it is difficult to stably maintain dispersibility for a long period of time since the surfactant or the like is oxidized or decomposed due to a change in temperature and a change with time. A method of finely grinding carbon black in water using glass beads and oxidizing carbon black using a hypohalite is also proposed as a method of treating the surface of carbon black while improving the dispersibility (JP-A-08-319444). However, the effect of grinding in water using glass beads is diminished due to buoyancy.

JP-A-08-003498 discloses a water-based pigment ink including water and carbon black having a surface active hydrogen content of 1.5 mmol/g or more, and a method of producing a water-based pigment ink including (a) providing acidic carbon black and (b) further oxidizing the acidic carbon black in water using a hypohalite. JP-A-08-319444 discloses a method of producing a water-based pigment ink including finely dispersing carbon black with an oil absorption of 100 ml/100 g or less in an aqueous medium and oxidizing the carbon black using a hypohalite.

According to the above methods, a water-based pigment ink with an excellent water-dispersibililty and a long-term dispersion stability is obtained by oxidizing carbon black so that a large amount of active hydrogen (i.e. hydrophilic functional groups) is formed on the surface of the carbon black. However, the number of hydrophilic functional groups existing at the contact interface between the surfaces of carbon black particles and water molecules is important for dispersing carbon black in water and maintaining a stable dispersed state. Therefore, it is difficult to accurately determine dispersibility merely by the number of functional groups per unit weight of carbon black.

The applicant of the present invention has focused on the number of hydrophilic hydrogen-containing functional groups per unit surface area of carbon black as an index for accurately determining dispersibility, and has developed easily water-dispersible carbon black which is modified by oxidation and in which the total number of carboxyl groups and hydroxyl groups per unit surface area is 3 µeq/m² or more (JP-A-11-148027).

A method of forming hydrophilic functional groups on the surface of the carbon black has a limited effect for improving the dispersibility of carbon black in water and maintaining the dispersion stability for a long period of time. The applicant has conducted further research and has found that high dispersiblity and dispersion stability in water are closely related to the aggregation state of carbon black particles. The applicant has developed and proposed highly water-dispersible carbon black obtained by oxidizing carbon black having a specific surface area by nitrogen adsorption (N₂SA) of 80 m²/g or more and a DBP absorption of 70 ml/100 g or less, wherein the Dupa/Dst ratio of the Stokes mode diameter Dst (nm) of the aggregate and the average particle diameter Dupa (nm) of the agglomerate is 1.5 to 2.0 (JP-A-11-148026).

JP-A-2003-535949 discloses a method of producing a self-dispersing pigment including oxidizing a pigment with ozone in an aqueous environment while subjecting the pigment to at least one dispersive mixing operation at a shear rate of at least 200 sec⁻¹. This method of simultaneously grinding and oxidizing the pigment has a problem in that oxidation becomes insufficient due to the low solubility of ozone gas in water.

EP 0802247 discloses an aqueous pigment ink composition comprising water and oxidized carbon black dispersed stably in the water, wherein said oxidized carbon black is obtained by oxidizing carbon black using hypohalous acid and/or salt thereof and wherein at least a part of an acidic group existing on the surface of said oxidized carbon black associates with an amine compound to form an ammonium salt. The aqueous pigment ink composition realizes smooth printing with ink jet nozzle, and smooth writing with fine pen tip and it has sufficient density. Further, the recorded traces obtained by using the ink composition is excellent in water resistance.

WO 01/94476 describes a process in which a pigment is oxidated with ozone in an aqueous environment in which the mixture of ozone, water and pigment is subjected to a dispersive mixing operation; and/or the pH of the mixture is maintained in a range of 6-8, whereby the pigment is self-dispersing and preferably has an acid value of less than 3 µmoles/M². Pigments from this process and ink jet inks containing the self-dispersing pigments, are also described.

### DISCLOSURE OF THE INVENTION

The inventors of the present invention have conducted intensive research on a method of further improving the dispersibility and the ink performance of a carbon black aqueous dispersion and obtained the following finding. Specifically, when dispersing carbon black in an aqueous medium, the inventors have mixed the carbon black and a surface chemical modifier in water to form slurry, and sprayed the slurry under pressure to cause collision between sprayed streams or between sprayed streams and a wall surface. As a result, the size of the carbon black was reduced, and chemically modifying groups were uniformly formed on the surfaces of the carbon black particles in the sprayed streams.

The present invention has been made in view of the above finding, and has an object of providing a carbon black aqueous dispersion which is suitable as an aqueous black ink for an inkjet printer or the like, and has an excellent fixation density, print quality, discharge stability, light resistance, and storage stability in a well-balanced manner when printed on plain paper, specialty paper, an OHP sheet, art paper, and the like, and a method of producing the same.

In order to achieve the above object, the present invention provides a carbon black aqueous dispersion obtained by spraying slurry including carbon black, a surface chemical modifier, and an aqueous medium from a nozzle under pressure to cause collision between sprayed streams or between sprayed streams and a wall surface.

In the above carbon black aqueous dispersion, carbon black agglomerates have a maximum particle diameter of 1 µm or less.

A method of producing a carbon black aqueous dispersion according to the present invention comprises mixing carbon black and a surface chemical modifier into an aqueous medium to form a slurry containing carbon black agglomerates, wherein the chemical surface modifier chemically modifies the carbon black to form hydrophilic functional groups, and spraying the slurry from a nozzle under pressure to cause collision between sprayed streams of the slurry or between sprayed streams of the slurry and a wall surface to atomize and chemically modify carbon black agglomerates, thereby forming a carbon black aqueous dispersion in which the carbon black agglomerates are finely dispersed in the aqueous medium.

In the above method of producing a carbon black aqueous dispersion, the carbon black is finely dispersed in the aqueous medium so that the maximum particle diameter of carbon black agglomerates is 1 µm or less.

### BRIEF DESCRIPTION OF THE DRAWING

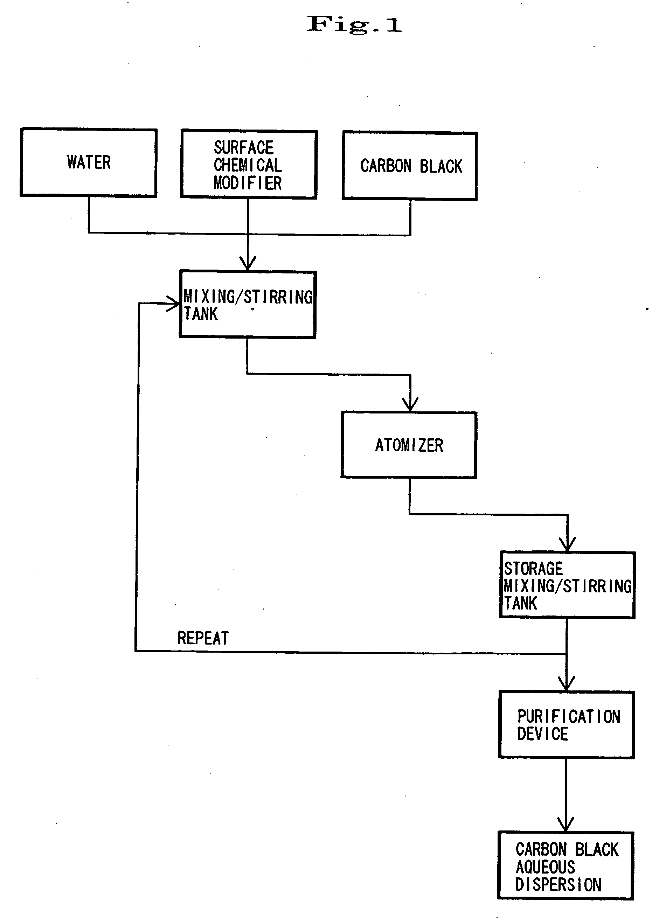

FIG. 1 is a flowchart showing an example of a process of producing a carbon black aqueous dispersion according to the present invention.

### BEST MODE FOR CARRYING OUT THE INVENTION

The carbon black applied in the present invention is not specifically limited, and may be furnace black, channel black, acetylene black, thermal black, or the like.

The surface chemical modifier chemically modifies the carbon black to form hydrophilic functional groups such as carboxyl groups and hydroxyl groups on the surfaces of the carbon black particles. Examples of the surface chemical modifier include oxidizing agents such as peroxo diacids (e.g. peroxosulfuric acid, peroxocarbonic acid, and peroxophosphoric acid) and salts thereof. As examples of the salts, salts of metals such as lithium, sodium, potassium, and aluminum, and ammonium salts can be given. The hydrophilic functional groups may be formed by diazo coupling reaction. Note that ozone gas produces only a small number of hydrophilic functional groups due to low solubility in water.

The aqueous medium mainly contains water. It is preferable to use water (more preferably deionized water) in terms of low cost and safety.

The carbon black aqueous dispersion according to the present invention is obtained by spraying a slurry including the carbon black, the surface chemical modifier, and an aqueous medium from a nozzle under pressure to cause collision between slurry streams sprayed as high-speed fluids or between sprayed streams and a wall surface. The carbon black agglomerates in the slurry are atomized by the impact of collision or the shear force at the time of spraying, and the surface chemical modifier is activated by friction heat produced at the time of collision or shearing, whereby the surfaces of the carbon black particles are chemically modified uniformly and efficiently.

In this case, the maximum particle diameter of the carbon black agglomerates in the carbon black aqueous dispersion is preferably 1 µm or less. Note that the term "carbon black agglomerate" used herein refers to an agglomerate in which aggregates of strongly bonded carbon black primary particles are entangled and aggregated.

The carbon black aqueous dispersion is produced by mixing the carbon black and the surface chemical modifier into an aqueous medium to form a slurry, spraying the slurry from a nozzle under pressure to cause collision between sprayed streams or between sprayed streams and a wall surface, or cause carbon black agglomerates to be sheared at the time of spraying to atomize and chemically modify the carbon black agglomerates, thereby finely dispersing the carbon black in the aqueous medium.

The carbon black is subjected to liquid-phase oxidation in the slurry in which the carbon black, the surface chemical modifier, and the aqueous medium are mixed in an appropriate quantitative ratio. As a result, hydrophilic functional groups such as carboxyl groups and hydroxyl groups are formed on the surfaces of the carbon black agglomerates. The temperature of the slurry at which the surface chemical modifier is activated by friction heat produced at the time of collision or shearing is preferably 40 to 90°C. The temperature of the slurry is adjusted by friction heat produced at the time of collision or shearing, but may also be adjusted by heating or cooling a nozzle portion, if necessary. If the temperature is lower than 40°C, the surface chemical modifier is not sufficiently activated and the extent of surface modification is therefore limited. If the temperature is higher than 90°C, it becomes difficult to control the temperature and a mechanical damage is likely to occur due to a sudden reaction. The temperature is more preferably 60 to 90°C.

In this case, the carbon black may be chemically modified uniformly and effectively by subjecting the carbon black to wet or dry oxidation in advance so that the carbon black can be dispersed efficiently in the slurry. Note that the term "wet oxidation" refers to oxidation using ozone water, a hydrogen peroxide aqueous solution, a peroxo diacid, or a peroxo diacid salt. Dry oxidation is performed by exposing the carbon black to a gas atmosphere such as ozone, oxygen, NO_{X}, or SO_{X}.

It is preferable to add a surfactant so that the carbon black is dispersed uniformly in the slurry. An anionic, nonionic, or cationic surfactant may be used.

Examples of the anionic surfactant include a fatty acid salt, an alkyl sulfuric ester salt, and an alkylaryl sulfonate. Examples of the nonionic surfactant include a polyoxyethylene alkyl ether and a polyoxyethylene alkylaryl ether. Examples of the cationic surfactant include an alkylamine salt and a quaternary ammonium salt.

The slurry is sprayed from a nozzle under pressure at a high speed to cause collision between sprayed streams or between sprayed streams and a wall surface. The carbon black agglomerates in the slurry are atomized by collision or shear force, and the surface chemical modifier is activated by friction heat produced at the time of collision or shearing, whereby the carbon black agglomerates are chemically modified uniformly and efficiently. Accordingly, the surfaces of the carbon black particles produced by atomizing the carbon black agglomerates can be chemically modified effectively.

Various commercially-available atomizers may be used as a means to atomize the carbon black agglomerates in the slurry by spraying the slurry from a nozzle to cause collision between sprayed streams or between sprayed streams and a wall surface. Examples of such atomizers include Microfluidizer (manufactured by Microfluidics Corporation), Ulthimaizer (manufactured by Sugino Machine Limited), Nanomizer (manufactured by Tokai Corporation), a high-pressure homogenizer, and the like.

The production process will be explained with reference to the production flowchart shown in FIG. 1. The carbon black and the surface chemical modifier are mixed in water (preferably deionized water) in a given quantitative ratio. The mixture is stirred and mixed sufficiently in a mixing/stirring tank at an appropriate temperature (e.g. room temperature to 90°C) to form a slurry.

The slurry is pressurized to about 50 MPa to 250 MPa, for example, by a high-pressure pump, and transferred to an atomizer. The slurry is then sprayed from a spray nozzle as a high-speed spray stream to cause collision between sprayed streams or between sprayed streams and a wall surface, or cause shearing at the time of spraying. In this case, the slurry in the mixing/stirring tank is continuously stirred and mixed so that the system in the atomizer is not obstructed, thereby keeping the slurry in a dispersed state.

The slurry atomized by the atomizer is transferred to a storage mixing/stirring tank, and is transferred back to the atomizer with stirring. The carbon black particles are atomized to desired agglomerates and are chemically modified. A collision is caused to occur between sprayed streams or between sprayed streams and a wall surface. The slurry is transferred to a purification device after a desired state is obtained. Thus, the carbon black aqueous dispersion according to the present invention is produced. A circulatory operation may be repeated in which the slurry atomized by the atomizer is transferred directly to the mixing/stirring tank without being transferred to the storage mixing/stirring tank.

By mutual collision, collision with a wall surface, or impact at the time of shearing, the carbon black agglomerates in the slurry are atomized preferably to such an extent that the maximum particle diameter of the agglomerates is 1 µm or less. The surface chemical modifier is activated by friction heat produced at the time of collision. This allows an efficient and uniform chemical modification of the surface of the carbon black, whereby functional groups such as carboxyl groups and hydroxyl groups are formed on the surfaces of the atomized carbon black agglomerates.

The maximum particle diameter of the carbon black agglomerates was measured by the following method.

The concentration of carbon black in the slurry was adjusted to 0.1 to 0.5 kg/cm³. A heterodyne laser Doppler particle size distribution measurement device (UPA model 9340 manufactured by Microtrac Inc.) was used for measurement. When particles in Brownian motion in a suspension are irradiated with a laser beam, the frequency of scattered light is modulated by the Doppler effect. The magnitude of the Brownian motion (i.e., particle diameter) is measured from the degree of frequency modulation. A cumulative frequency distribution curve is created from the particle diameters of the carbon black agglomerates thus measured. The value at a cumulative frequency of 99% of the cumulative frequency distribution curve is taken as the maximum particle diameter (Dupa 99%, nm) of the carbon black agglomerates.

The carbon black agglomerates in the slurry can be efficiently atomized and chemically modified by the above production process. Therefore, the concentration of carbon black in the slurry can be increased, whereby an efficient treatment is realized. The concentration of carbon black in the slurry is set at 3 to 25 wt%, and preferably 5 to 15 wt%. Moreover, the proportion of the surface chemical modifier in the slurry may be reduced. The concentration of the surface chemical modifier contained in the slurry is adjusted to 0.1 to 50 wt% according to the purpose.

The carbon black aqueous dispersion in which the carbon black is finely dispersed in the aqueous medium can thus be produced. The carbon black aqueous dispersion is subjected to neutralization, residual salt removal, classification, concentration adjustment, and the like according to the application to produce an aqueous black ink such as an ink for an inkjet printer.
Neutralization: Since carboxyl groups and hydroxyl groups are formed on the surfaces of the carbon black particles by chemical modification, the carbon black exhibits an excellent water-dispersibility. The carbon black aqueous dispersion may be neutralized according to the application. As examples of a neutralizing agent, alkali salts such as potassium hydroxide and sodium hydroxide, ammonia, and organic amines such as ethanolamine, triethanolamine, dimethylaminoethanol, and quaternary amines can be given. The carbon black aqueous dispersion may be neutralized at room temperature. However, it is preferable to add the neutralizing agent to the slurry in the stirring tank and stir the slurry at 95 to 105°C for 2 to 5 hours in order to neutralize the carbon black aqueous dispersion completely.
Residual salt removal: The water-dispersibility of the carbon black is improved and the carbon black is prevented from re-aggregating by removing reduced salts formed by chemical modification and salts formed by neutralization. A separation membrane such as an ultrafiltration (UF) membrane, a reverse osmosis (RO) membrane, and an electrodialysis membrane is preferably used as a reduced salt removal means.
Classification: In the case where large undispersed clusters or coarse particles exist in the carbon black aqueous dispersion, the clusters or particles are classified and removed by a centrifugation or filtration method in order to prevent clogging of an inkjet printer nozzle.
Concentration adjustment: The concentration of the carbon black aqueous dispersion is adjusted to a concentration (e.g. 0.1 to 20 wt%) appropriate for a black ink. The concentration is adjusted by adding or removing water.

An aqueous black ink having an excellent dispersibility and ink performance is prepared by optionally adding commonly-used ink components such as an antiseptic agent, a viscosity regulator, and a resin to the carbon black aqueous dispersion thus produced.

### EXAMPLES

The present invention will be explained in detail with reference to examples. Note that the present invention is not limited to the following examples without departing from the scope of the present invention.

### Example 1

A mixing/stirring tank was charged with Tokablack 7550F (manufactured by Tokai Carbon Co., Ltd.) as carbon black, sodium peroxodisulfate as a surface chemical modifier, and deionized water in a proportion stated below. The mixture was sufficiently stirred and mixed to obtain a slurry. The slurry was continuously stirred and mixed.
Carbon black: 10 parts by weight
Sodium peroxodisulfate: 10 parts by weight
Deionized water: 80 parts by weight

An Ulthimaizer (manufactured by Sugino Machine Limited) was used as an atomizer. The slurry was fed to the Ulthimaizer and was sprayed under a pressure of 245 MPa to cause collision between sprayed streams. The slurry was transferred temporarily to a storage mixing/stirring tank, cooled with stirring, and transferred back to the mixing/stirring tank. The slurry was atomized by repeating the above operation of causing the slurry to collide 10 times. The temperature of the slurry rose from 45°C (initial temperature) to 90°C by friction heat produced at the time of spraying and collision.

After the above process, salts were removed from the slurry using an ultrafiltration membrane (AHV-1010 manufactured by Asahi Kasei Corporation). The slurry was then held at 100°C and stirred with ammonia for 2 hours to effect neutralization. The slurry was purified to 200 µS/cm or less using the above ultrafiltration membrane in a state where the solid content of the carbon black was 4 wt% to produce a carbon black aqueous dispersion in which the dispersion concentration of the carbon black was 20 wt%.

### Comparative Example 1

A slurry was prepared by stirring and mixing carbon black, sodium peroxodisulfate, and deionized water in the same proportion as in Example 1. The slurry was atomized by stirring and mixing the slurry in a stirring tank at a rotational speed of 300 rpm for 10 hours. The slurry was not subjected to the atomizing process using the Ulthimaizer. Salts were removed from the slurry using an ultrafiltration membrane, and a neutralization process using ammonia and a purification process were performed in the same manner as in Example 1 to produce a carbon black aqueous dispersion in which the dispersion concentration of the carbon black was 20 wt %.

In order to evaluate the water-dispersibility and the ink performance of the carbon black aqueous dispersion thus produced, viscosity, the maximum particle diameter of carbon black agglomerates, filterability, print density, and the like were measured by the following methods.

### Measurement of viscosity:

A sample was held at 70°C in an airtight container. The viscosity of the sample was measured after 1 to 4 weeks using a rotational vibration type viscometer (VM-100-L manufactured by Yamaichi Electronics Co., Ltd.).

### Maximum particle diameter of carbon black agglomerates:

The particle diameters of the carbon black agglomerates were measured for each sample of which the viscosity was measured using a heterodyne laser Doppler particle size distribution measurement device (UPA model 9340 manufactured by Microtrac Inc.), and a cumulative frequency distribution curve was created to determine the maximum particle diameter (Dupa 99%, nm) of the carbon black agglomerates.

### Filterability:

A filtration test was conducted in which 200 g of the sample was filtered using a No. 2 filter paper (diameter: 90) and a filter having a pore size of 3 µm, 0.8 µm, 0.65 µm, or 0.45 µm under reduced pressure of 2666.4 Pa. The amount of the sample filtered was measured.

### Print density:

The carbon black aqueous dispersion was diluted to a carbon black concentration of 4 wt%, and was printed on XEROX 4024 printing paper by a #6 bar coater. The optical density was measured using a Macbeth densitometer (RD-927 manufactured by Kollmorgen Instruments Corporation).

The results are shown in Table 1.

**TABLE 1**

| | Example | Comparative Example |
|---|---|---|
| Viscosity (cp) | | |
| Initial | 3.26 | 2.90 |
| 70°C, after 1 week | 3.25 | 2.85 |
| 70°C, after 2 weeks | 3.25 | 2.93 |
| 70°C, after 3 weeks | 3.25 | 3.15 |
| 70°C, after 4 weeks | 3.24 | 3.89 |

| Maximum particle diameter of agglomerates (nm) | | |
|---|---|---|
| Initial | 200 | 377 |
| 70°C, after 1 week | 201 | 378 |
| 70°C, after 2 weeks | 200 | 385 |
| 70°C, after 3 weeks | 201 | 396 |
| 70°C, after 4 weeks | 199 | 412 |

| Filterability (%) | | |
|---|---|---|
| No. 2 filter paper | 100 | 50 |
| Pore size: 3 µm | 100 | 0 |
| Pore size: 0.8 µm | 100 | 0 |
| Pore size: 0.65 mµm | 20 | 0 |
| Pore size: 0.45 µm | 0 | 0 |
| Print density (OD value) | 1.40 | 1.35 |

It can be seen from the results shown in Table 1 that the carbon black aqueous dispersion in the example remained stable without showing changes in viscosity after 1 to 4 weeks. In the comparative example, although almost no changes in viscosity occurred in the initial stage, the viscosity increased after about 3 weeks. In the example, the maximum particle diameter of the carbon black agglomerates in the aqueous dispersion did not change. In the comparative example, the maximum particle diameter of the carbon black agglomerates gradually increased due to aggregation of the carbon black particles. In addition, the carbon black agglomerates in the comparative example had a large maximum particle diameter, low dispersion stability, and poor filtration test results. The carbon black aqueous dispersion of the example had a higher print density than that of the comparative example, and thus, had a higher degree of blackness.

### INDUSTRIAL APPLICABILITY

According to the present invention, a carbon black aqueous dispersion suitable as an aqueous black ink for an inkjet printer or the like can be provided. The carbon black aqueous dispersion is highly water-dispersible, has an excellent dispersibility which allows a dispersed state to be stably maintained for a long period of time, has a high degree of blackness and excellent filterability, has a fixation density, discharge stability, and storage stability in a well-balanced manner, and has excellent water-dispersibility and ink performance. The production method according to the present invention enables the above carbon black aqueous dispersion to be produced which has excellent water-dispersibility and ink performance.

## Claims

1. A method of producing a carbon black aqueous dispersion comprising:
mixing carbon black and a chemical surface modifier into an aqueous medium to form a slurry containing carbon black agglomerates, wherein the chemicalsurface modifier chemically modifies the carbon black to form hydrophilic functional groups,
and spraying the slurry from a nozzle under pressure to cause collision between sprayed streams of the slurry or between sprayed streams of the slurry and a wall surface to atomize and chemically modify carbon black agglomerates, thereby forming a carbon black aqueous dispersion in which the carbon black agglomerates are finely dispersed in the aqueous medium.

2. The method of producing a carbon black aqueous dispersion according to claim 1, wherein the carbon black agglomerates have a maximum particle diameter of 1 µm or less.

## Patentansprüche

1. Verfahren zur Herstellung einer wässrigen Rußdispersion, umfassend:
Einmischen von Ruß und eines chemischen Oberflächenmodifizierers in ein wässriges Medium, um eine Aufschlämmung zu erzeugen, die Rußagglomerate enthält, wobei der chemische Oberflächenmodifizierer den Ruß chemisch so modifiziert, dass hydrophile funktionelle Gruppen gebildet werden,
und Sprühen der Aufschlämmung unter Druck aus einer Düse, um ein Zusammenstoßen der gesprühten Ströme der Aufschlämmung oder der gesprühten Ströme der Aufschlämmung mit einer Wandfläche zu bewirken, um somit Rußagglomerate zu atomisieren und chemisch zu modifizieren, wodurch eine wässrige Rußdispersion gebildet wird, in welcher die Rußagglomerate in dem wässrigen Medium fein dispergiert sind.

2. Verfahren zur Herstellung einer wässrigen Rußdispersion nach Anspruch 1, wobei die Rußagglomerate einen maximalen Teilchendurchmesser von 1 µm oder weniger aufweisen.

## Revendications

1. Procédé de production d'une dispersion aqueuse de noir de carbone comprenant les étapes consistant à :
mélanger du noir de carbone et un modificateur de surface chimique dans un milieu aqueux afin de former une pâte contenant des agglomérats de noir de carbone, dans lequel le modificateur de surface chimique modifie de manière chimique le noir de carbone afin de former des groupes fonctionnels hydrophiles,
et projeter la pâte à partir d'une buse sous pression afin de provoquer une collision entre des flux projetés de la pâte ou entre des flux projetés de la pâte et une surface de paroi afin d'atomiser et de modifier de manière chimique des agglomérats de noir de carbone, ce qui permet de former une dispersion aqueuse de noir de carbone dans laquelle les agglomérats de noir de carbone sont finement dispersés dans le milieu aqueux.

2. Procédé de production d'une dispersion aqueuse de noir de carbone selon la revendication 1, dans lequel les agglomérats de noir de carbone présentent un diamètre de particule maximum de 1 pm ou moins.
